# FASCICULE DE BREVET EUROPEEN

(11) **EP 3 122 061 B1**
(45) Date de publication et mention de la délivrance du brevet: **03.10.2018**
(21) Numéro de dépôt: 16178472.3
(22) Date de dépôt: 07.07.2016
(51) Int. Cl.: H04Q 9/00, G01D 4/00, H04B 3/54, H04L 9/00

(54) **TRANSMISSION DE DONNÉES CHIFFRÉES DEPUIS DES COMPTEURS ÉLECTRIQUES INTELLIGENTS**
ÜBERTRAGUNG VON VERSCHLÜSSELTEN DATEN VON INTELLIGENTEN STROMZÄHLERN AUS
TRANSMISSION OF ENCRYPTED DATA FROM SMART ELECTRIC METERS

(30) Priorité: 21.07.2015 FR 1556897
(43) Date de publication de la demande: 25.01.2017
(73) Titulaire: SAGEMCOM ENERGY & TELECOM SAS, 92500 Rueil-Malmaison (FR)
(72) Inventeur: TEBOULLE, Henri, 92500 Rueil Malmaison (FR); HARNAY, Franck, 92500 Rueil Malmaison (FR); ROTER, Ziv, 92500 Rueil Malmaison (FR)
(74) Mandataire: Cabinet Le Guen Maillet

(56) Documents cités:
- WO-A1-2015/091290
- WO-A2-2009/147314
- FR-A1- 3 014 188

## Description

La présente invention concerne une transmission d'informations chiffrées depuis des compteurs électriques intelligents vers une entité de gestion d'un système de communication auquel lesdits compteurs électriques appartiennent.

Les réseaux de communication par courants porteurs en ligne (« PowerLine Communications » en anglais) pour des systèmes de type AMM (« Automated Meter Management » en anglais) ont fait leur apparition ces dernières années. On peut par exemple citer les spécifications PRIME (« PoweRline Intelligent Metering Evolution » en anglais) et le standard G3-PLC spécifié dans la recommandation ITU-T G.9903. Dans de tels réseaux de communication par courants porteurs en ligne, des communications sont établies entre des compteurs électriques, dits intelligents (« smart electrical meters » en anglais), et un dispositif concentrateur de données (« data concentrator » en anglais), parfois appelé *noeud de base* (« base node » en anglais), ou *coordinateur* (« coordinator » en anglais), pour permettre notamment une relève automatisée à distance de mesures de consommation électrique effectuées par lesdits compteurs électriques intelligents. Une pluralité de tels dispositifs concentrateurs de données est typiquement géographiquement déployée de manière à répartir la charge de gestion à distance d'une multitude de compteurs électriques intelligents, chaque dispositif concentrateur de données étant ensuite connecté à une même entité de gestion du système de type AMM qui est gérée par l'opérateur du réseau d'alimentation électrique auquel lesdits compteurs électriques intelligents sont connectés.

De telles communications par courants porteurs en ligne doivent faire face à des interférences liées à des phénomènes de diaphonie, et/ou à un manque de fiabilité de certains liens de communication dans le réseau de communication par courants porteurs en ligne (*e.g*. limite de portée due à la longueur des câbles), et/ou à des bruits de différentes natures (bruits blancs, bruits colorés, bruits impulsionnels principalement), et/ou à des désadaptations d'impédance. Pour rappel, la diaphonie est un phénomène qui permet à des signaux, typiquement par couplage capacitif, de se propager sans passer par des paires de cuivre proprement dites, mais par des liens parasites non visibles. Ce phénomène est instable, car pouvant varier en fonction de la température ou de l'activité sur le réseau de communication par courants porteurs en ligne. A noter qu'il peut également y avoir de la diaphonie au sein d'un même appareil via des liaisons cuivre sur circuits imprimés et/ou via certains composants qui constituent ledit appareil. Ces phénomènes peuvent entraîner des pertes de paquets ou messages, notamment de paquets ou messages de signalisation, et entraîner des déconnexions de dispositifs noeuds du réseau de communication. Une telle instabilité des réseaux de communication par courants porteurs en ligne rend problématique la transmission d'informations de la part des compteurs électriques intelligents à destination de l'entité de gestion du système de type AMM, notamment en termes de latence puisque, par exemple, les reconfigurations du réseau de communication suite à des déconnexions de compteurs électriques intelligents, dont certains servent de relais entre un dispositif concentrateur de données et d'autres compteurs électriques intelligents, sont longues et fastidieuses.

Il est souhaitable de pallier ces inconvénients de l'état de la technique, et notamment d'améliorer les capacités de transmission d'informations de la part des compteurs électriques intelligents à destination de l'entité de gestion du système de type AMM. De plus, les transmission d'informations de la part des compteurs électriques intelligents à destination de l'entité de gestion du système de type AMM s'effectue sous forme chiffrée pour éviter une collecte d'informations extérieure vis-à-vis des compteurs électriques intelligents et aussi éviter une prise de contrôle extérieure desdits compteurs électriques intelligents. Il est donc, dans ce cadre, en outre souhaitable de maintenir le niveau de sécurité exigé des transmissions d'informations de la part des compteurs électriques intelligents à destination de l'entité de gestion du système de type AMM, et ce, de manière efficace et peu coûteuse.

Le document FR3014188 divulgue un capteur de mesure d'une grandeur électrique destiné à être relié à un serveur informatique via une passerelle de communication grâce à une connexion sécurisée.

L'invention concerne un procédé pour transmettre des informations chiffrées à une entité de gestion dans un système de communication comportant en outre au moins un dispositif concentrateur de données auquel sont rattachés des compteurs électriques intelligents via un premier réseau de communication par courants porteurs en ligne, chaque dispositif concentrateur de données étant connecté à l'entité de gestion via un second réseau de communication et servant de relais sans déchiffrement de partie utile de trame entre lesdits compteurs électriques intelligents et l'entité de gestion. Le système de communication comporte en outre au moins une passerelle de collecte à laquelle sont rattachés des compteurs électriques intelligents via un troisième réseau de communication de type LPWAN, ainsi qu'un serveur connecté à chaque passerelle de collecte par un quatrième réseau de communication et à l'entité de gestion par un cinquième réseau de communication, chaque passerelle de collecte servant de relais sans déchiffrement de partie utile de trame entre lesdits compteurs électriques intelligents et le serveur, le serveur servant de relais sans déchiffrement de partie utile de trame entre chaque passerelle de collecte et l'entité de gestion. Le procédé est tel que chaque compteur électrique intelligent souhaitant transmettre lesdites informations à l'entité de gestion effectue les étapes suivantes : chiffrer lesdites informations à l'aide de clefs partagées avec l'entité de gestion dans le cadre d'un contexte applicatif de chiffrement établi via le premier réseau de communication et destinées à des opérations de sécurisation de données sur le premier réseau de communication ; sélectionner par défaut le premier réseau de communication et basculer sur le troisième réseau de communication, suite à des dysfonctionnements du premier réseau de communication ; et transmettre une trame à destination de l'entité de gestion via le réseau de communication sélectionné, la trame étant telle que sa partie utile est constituée desdites informations chiffrées, de sorte que lesdites informations sont chiffrées indépendamment du réseau de communication effectivement sélectionné. Ainsi, les capacités de transmission d'informations de la part des compteurs électriques intelligents à destination de l'entité de gestion sont améliorées, tout en maintenant le niveau de sécurité exigé des transmissions d'informations de la part des compteurs électriques intelligents à destination de l'entité de gestion, et ce, de manière efficace et peu coûteuse.

Selon un mode de réalisation particulier, le troisième réseau de communication est un réseau étendu à longue portée de type LoRaWan.

Selon un mode de réalisation particulier, le premier réseau de communication étant conforme aux spécifications PRIME, ledit compteur électrique intelligent bascule sur le troisième réseau de communication, lorsque ledit compteur électrique intelligent ne parvient pas, au bout d'une première durée prédéfinie, à établir une connexion au sens du standard IEC 61334-4-32 avec ledit dispositif concentrateur de données.

Selon un mode de réalisation particulier, ledit compteur électrique intelligent sélectionne à nouveau le premier réseau de communication, lorsque ledit compteur électrique intelligent parvient à établir une connexion au sens du standard IEC 61334-4-32 avec ledit dispositif concentrateur de données.

Selon un mode de réalisation particulier, ledit compteur électrique intelligent bascule sur le troisième réseau de communication, lorsque ledit compteur électrique intelligent ne parvient pas à obtenir un accusé de réception de la part de l'entité de gestion, au bout d'une seconde durée prédéfinie, bien qu'ayant réussi à établir une connexion au sens du standard IEC 61334-4-32 avec ledit dispositif concentrateur de données.

Selon un mode de réalisation particulier, ledit compteur électrique intelligent sélectionne à nouveau le premier réseau de communication, lorsque ledit compteur électrique intelligent parvient à obtenir un accusé de réception de la part de l'entité de gestion.

Selon un mode de réalisation particulier, le premier réseau de communication étant conforme au standard G3-PLC, ledit compteur électrique intelligent bascule sur le troisième réseau de communication, lorsque ledit compteur électrique intelligent ne parvient pas à établir, au bout d'une troisième durée prédéfinie, une route vers le dispositif concentrateur.

Selon un mode de réalisation particulier, ledit compteur électrique intelligent sélectionne à nouveau le premier réseau de communication, lorsque ledit compteur électrique intelligent parvient à établir une route vers le dispositif concentrateur.

Selon un mode de réalisation particulier, ledit compteur électrique intelligent sélectionne à nouveau le premier réseau de communication lorsqu'une quatrième durée prédéfinie est écoulée depuis que ledit compteur électrique intelligent a basculé vers le troisième réseau de communication.

Selon un mode de réalisation particulier, lorsque ledit compteur électrique intelligent a basculé sur le troisième réseau de communication lors du dernier envoi précédent à destination de l'entité de gestion, ledit compteur électrique intelligent sélectionne à nouveau le premier réseau de communication pour l'envoi desdites informations à destination de l'entité de gestion.

Selon un mode de réalisation particulier, ledit compteur électrique intelligent sélectionne à nouveau le premier réseau de communication, lorsque ledit compteur électrique intelligent détecte une déconnexion du troisième réseau de communication.

Selon un mode de réalisation particulier, en sélectionnant à nouveau le premier réseau de communication, ledit compteur électrique intelligent attend une cinquième durée prédéfinie avant d'effectuer une tentative de transmission desdites informations à destination de l'entité de gestion via le premier réseau de communication.

Selon un mode de réalisation particulier, le troisième réseau de communication est utilisé par l'entité de gestion pour diffuser aux compteurs électriques intelligents des informations de qualité de transmission relatives au premier réseau de communication, utilisées afin de sélectionner le réseau de communication à utiliser parmi le premier réseau de communication et le troisième réseau de communication.

L'invention concerne également un système de communication comportant une entité de gestion à laquelle des informations chiffrées doivent être transmises et au moins un dispositif concentrateur de données auquel sont rattachés des compteurs électriques intelligents via un premier réseau de communication par courants porteurs en ligne, chaque dispositif concentrateur de données étant connecté à l'entité de gestion via un second réseau de communication et servant de relais sans déchiffrement de partie utile de trame entre lesdits compteurs électriques intelligents et l'entité de gestion. Le système de communication comporte en outre au moins une passerelle de collecte à laquelle sont rattachés des compteurs électriques intelligents via un troisième réseau de communication de type LPWAN, ainsi qu'un serveur connecté à chaque passerelle de collecte par un quatrième réseau de communication et à l'entité de gestion par un cinquième réseau de communication, chaque passerelle de collecte servant de relais sans déchiffrement de partie utile de trame entre lesdits compteurs électriques intelligents et le serveur, le serveur servant de relais sans déchiffrement de partie utile de trame entre chaque passerelle de collecte et l'entité de gestion. De plus, chaque compteur électrique intelligent souhaitant transmettre lesdites informations à l'entité de gestion implémente : des moyens pour chiffrer lesdites informations à l'aide de clefs partagées avec l'entité de gestion dans le cadre d'un contexte applicatif de chiffrement établi via le premier réseau de communication et destinées à des opérations de sécurisation de données sur le premier réseau de communication ; des moyens pour sélectionner par défaut le premier réseau de communication et basculer sur le troisième réseau de communication, suite à des dysfonctionnements du premier réseau de communication ; et des moyens transmettre une trame à destination de l'entité de gestion via le réseau de communication sélectionné, la trame étant telle que sa partie utile est constituée desdites informations chiffrées, de sorte que lesdites informations sont chiffrées indépendamment du réseau de communication effectivement sélectionné.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de communication dans le cadre d'une gestion automatisée à distance de compteurs électriques intelligents, dans un mode de réalisation de l'invention ;
- la Fig. 2 illustre schématiquement un exemple d'architecture matérielle de dispositif de communication du système de la Fig. 1 ;
- la Fig. 3 illustre schématiquement un algorithme, exécuté par chaque compteur électrique intelligent du système de la Fig. 1, pour transmettre des informations chiffrées à une entité de gestion du système de la Fig. 1 ;
- la Fig. 4 illustre schématiquement un algorithme, exécuté chaque concentrateur de données du système de la Fig. 1, par chaque passerelle de collecte du système de la Fig. 1 et par un serveur du système de la Fig. 1, pour servir de relais entre les compteurs électriques intelligents et l'entité de gestion du système de la Fig. 1 ; et
- la Fig. 5 illustre schématiquement un algorithme, exécuté par l'entité de gestion du système de la Fig. 1, pour traiter les informations chiffrées en provenance des compteurs électriques intelligents.

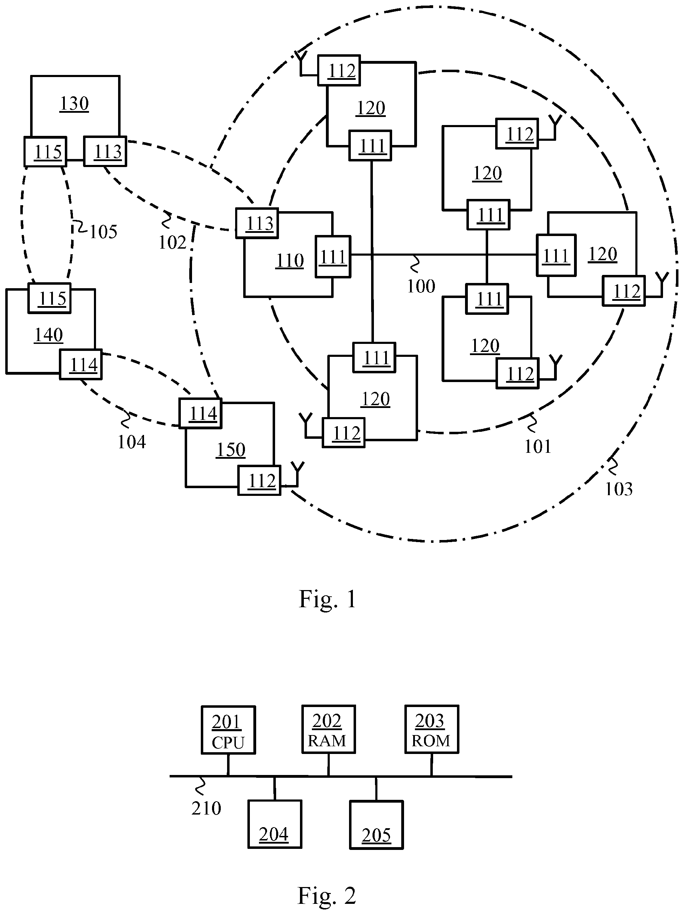

La Fig. 1 illustre schématiquement un système de communication dans le cadre d'une gestion automatisée à distance de compteurs électriques intelligents, dans un mode de réalisation de l'invention.

Le système de communication de la Fig. 1, de type AMM, comporte une entité de gestion 130 dudit système et une pluralité de compteurs électriques intelligents 120. L'entité de gestion 130 est notamment en charge de collecter des informations transmises par les compteurs électriques intelligents 120, telles que des informations de relevés de consommation électrique d'installations électriques que lesdits compteurs électriques intelligents 120 sont en charge de surveiller. Pour permettre auxdits compteurs électriques intelligents 120 de transmettre lesdites informations à l'entité de gestion 130, des communications par courants porteurs en ligne sont établies entre chacun desdits compteurs électriques intelligents 120 et un dispositif concentrateur de données 110. Le système de communication comporte typiquement une pluralité de dispositifs concentrateurs de données 110, un seul étant représenté sur la Fig. 1. A chaque dispositif concentrateur de données 110 est connectée, de manière logique, une pluralité de compteurs électriques intelligents 120, chaque dispositif concentrateur de données 110 servant ainsi de relais entre lesdits compteurs électriques intelligents 120 qui lui sont connectés et l'entité de gestion 130. Un réseau de communication par courants porteurs en ligne 101 est ainsi formé entre chaque dispositif concentrateur de données 110 et la pluralité de compteurs électriques intelligents 120 qui lui est connectée, en s'appuyant sur un réseau d'alimentation électrique 100 servant à alimenter en électricité les installations électriques que lesdits compteurs électriques intelligents 120 sont en charge de surveiller. Chaque compteur électrique intelligent 120 comporte ainsi une interface 111 de communication par courants porteurs en ligne permettant de communiquer via le réseau de communication par courants porteurs en ligne 101. De même, chaque dispositif concentrateur de données 110 comporte une telle interface 111 de communication par courants porteurs en ligne permettant de communiquer via le réseau de communication par courants porteurs en ligne 101. Selon un exemple de réalisation, le réseau de communication par courants porteurs en ligne 101 est conforme aux spécifications PRIME. Selon un autre exemple de réalisation, le réseau de communication par courants porteurs en ligne 101 est conforme au standard G3-PLC.

Il faut comprendre que la topologie du réseau de communication par courants porteurs en ligne 101 n'est pas figée. A cause notamment des phénomènes de diaphonie et autres interférences, des compteurs électriques intelligents 120 peuvent se trouver déconnectés du réseau de communication par courants porteurs en ligne 101 et cherchent alors à se réenregistrer au sein du réseau de communication par courants porteurs en ligne 101. La topologie du réseau de communication par courants porteurs en ligne 101 à ce moment-là est alors probablement différente de la topologie du réseau de communication par courants porteurs en ligne 101 avant déconnexion desdits compteurs électriques intelligents 120.

Pour permettre de relayer les informations transmises par les compteurs électriques intelligents 120 à destination de l'entité de gestion 130, chaque dispositif concentrateur de données 110 comporte en outre une interface 113 de communication avec un réseau de communication 102, auquel est aussi connectée l'entité de gestion 130. Etant donné que les dispositifs concentrateurs de données 110 peuvent être typiquement installés au sein de postes de transformation du réseau d'alimentation électrique 100, le réseau de communication 102 est préférentiellement un réseau de télécommunication sans-fil. Selon un exemple de réalisation, le réseau de communication 102 est conforme au standard UMTS (« Universal Mobile Telecommunications System » en anglais). Selon un autre exemple de réalisation, le réseau de communication 102 est conforme au standard LTE (« Long Term Evolution » en anglais).

Dans le cadre de la présente invention, chaque compteur électrique intelligent 120 comporte en outre une interface de communication 112 avec un réseau de communication sans-fil 103 de type LPWAN (« Low-Power Wide Area Network » en anglais) tel qu'utilisé dans l'Internet des Objets (« Internet of Things » en anglais). Pour interconnecter des objets, appelés objets communicants, dans le cadre de l'Internet des Objets, des passerelles de collecte situées sur des points géographiquement hauts sont géographiquement déployées. Hors opérations de maintenance, ces passerelles sont fixes et permanentes. On peut par exemple citer sur ce modèle les réseaux SigFox ou ThingPark. Par exemple, en France, le réseau SigFox s'appuie sur les points hauts des sites de transmission de TDF (« Télédiffusion De France »). Ces passerelles de collecte communiquent avec les objets communicants grâce à des systèmes de communication radio à faible puissance et à longue portée de type LPWAN. Ainsi, pour fournir un autre moyen pour permettre auxdits compteurs électriques intelligents 120 de transmettre des informations à l'entité de gestion 130, des communications de type LPWAN sont établies entre chacun desdits compteurs électriques intelligents 120 et une passerelle de collecte 150. A noter que les compteurs électriques intelligents 120 rattachés à un même dispositif concentrateur de données 110 peuvent être rattachés à des passerelles de collecte 150 distinctes. Le système de communication comporte typiquement une pluralité de passerelles de collecte 150, une seule étant représentée sur la Fig. 1. A chaque passerelle de collecte 150 est connectée, de manière logique, une pluralité de compteurs électriques intelligents 120.

Chaque passerelle de collecte 150 sert ainsi de relais entre lesdits compteurs électriques intelligents 120 qui lui sont connectés et un serveur LPWAN 140, qui lui-même assure un relais avec l'entité de gestion 130 via un réseau de communication 105 de type IP (« Internet Protocol » en anglais, tel que défini dans le document normatif RFC 791), tel que l'Internet. Ainsi, chaque passerelle de collecte 150 comporte une interface de communication 112 avec le réseau de communication sans-fil 103 de type LPWAN pour lui permettre de communiquer avec les compteurs électriques intelligents 120 et une interface de communication 114 avec un réseau de communication fédérateur 104 pour lui permettre de communiquer avec le serveur LPWAN 140. Le serveur LPWAN 140 comporte alors une interface de communication 114 pour lui permettre de communiquer, via le réseau de communication fédérateur 104, avec une pluralité de passerelles de collecte 150, et une interface 115 de communication avec le réseau de communication 105 de type IP pour lui permettre de communiquer avec l'entité de gestion 130.

Comme on le verra par la suite, chaque dispositif concentrateur de données 110 sert de relais sans déchiffrement de partie utile de trame entre les compteurs électriques intelligents 120 qui lui sont rattachés et l'entité de gestion 130. De plus, chaque passerelle de collecte 150 sert de relais sans déchiffrement de partie utile de trame entre les compteurs électriques intelligents 120 qui lui sont rattachés et le serveur LPWAN 140. Enfin, le serveur LPWAN 140 sert de relais sans déchiffrement de partie utile de trame entre chaque passerelle de collecte 150 et l'entité de gestion 130.

Préférentiellement, le réseau de communication sans-fil 103 est un réseau étendu à longue portée LoRaWan (« Long Range Wide-area network » en anglais), aussi connu sous l'appellation « LoRa » du nom de l'alliance faisant la promotion de technologies de réseaux étendus à longue portée LoRaWan.

L'entité de gestion 130 comporte ainsi une interface 113 de communication avec le réseau de communication 102 lui permettant de communiquer avec une pluralité de dispositifs concentrateurs de données 110, et une interface 115 de communication avec le réseau de communication 105 de type IP pour lui permettre de communiquer avec le serveur LPWAN 140. L'entité de gestion 130 est préférentiellement conforme à l'ensemble de standards IEC 62056, *i.e.* aux spécifications DLMS (« Device Language Message Spécification » en anglais) et COSEM (« Companion Specification for Energy Metering » en anglais).

Les communications entre l'entité de gestion 130 et le serveur LPWAN 140 sont préférentiellement assurées via un réseau privé virtuel VPN (« Virtual Private Network » en anglais).

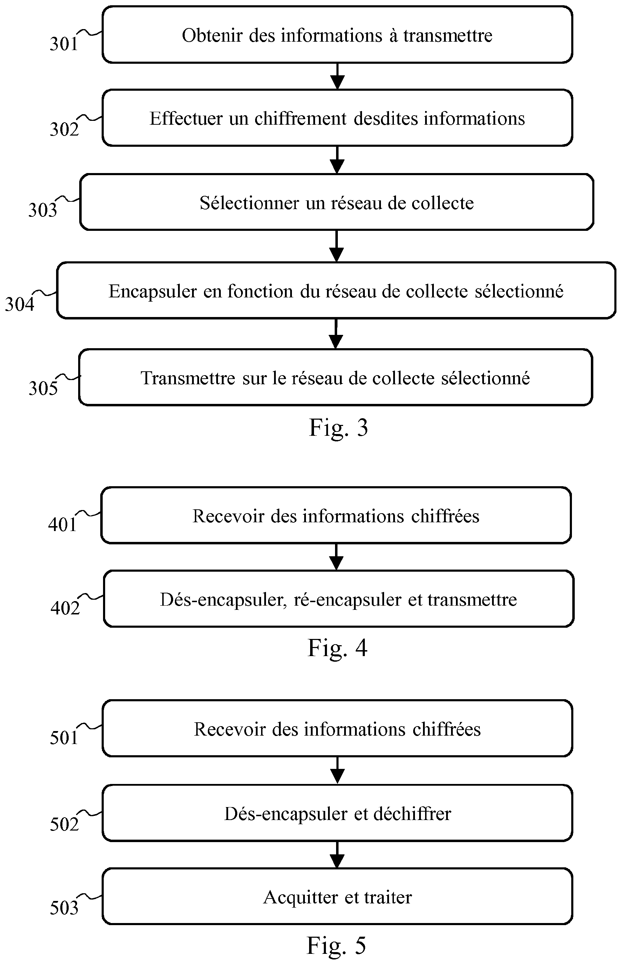

Un tel agencement offre alors deux alternatives pour permettre aux compteurs électriques intelligents 120 de transmettre des informations à l'entité de gestion 130. Ainsi, du point de vue des compteurs électriques intelligents 120, le réseau de communication par courants porteurs en ligne 101 constitue un réseau de collecte primaire et le réseau de communication 103 de type LPWAN constitue un réseau de collecte secondaire. Une sélection appropriée du réseau de collecte à utiliser pour transmettre des informations à partir des compteurs électriques intelligents 120 jusqu'à l'entité de gestion 130 permet d'assurer de bonnes performances de collecte, tout en assurant une sécurisation desdites informations, et ce, de manière efficace et peu coûteuse. Cet aspect est détaillé par la suite en relation avec les Figs. 3 et 4.

Il convient de noter que chaque compteur électrique intelligent 120 peut se connecter au réseau de communication 103 de type LPWAN lors d'une phase d'initialisation, permettant ainsi de pouvoir utiliser le réseau de communication 103 de type LPWAN au besoin et notamment pour recevoir, dans un mode de réalisation particulier, des informations de qualité de transmission relatives au réseau de communication par courants porteurs en ligne 101. Cela est d'autant plus approprié que les passerelles de collecte 150 et les compteurs électrique intelligents 120 sont destinés à être géographiquement fixes. En variante, chaque compteur électrique intelligent 120 peut se connecter au réseau de communication 103 de type LPWAN au moment où ledit compteur électrique intelligent 120 a besoin de basculer vers le réseau de communication 103 de type LPWAN suite à une défaillance du réseau de communication par courants porteurs en ligne 101 ; en cas de basculement dans le sens inverse, ledit compteur électrique intelligent 120 peut alors se déconnecter du réseau de communication 103 de type LPWAN.

La Fig. 2 illustre schématiquement un exemple d'architecture matérielle de dispositif de communication du système de la Fig. 1, que ce soit un dispositif concentrateur de données 110, un compteur électrique intelligent 120, une passerelle de collecte 150, le serveur LPWAN 140, ou l'entité de gestion 130.

Le dispositif de communication comprend alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage 204, tel qu'un disque dur HDD (« Hard Disk Drive » en anglais), ou un lecteur de support de stockage, tel qu'un lecteur de cartes SD (« Secure Digital » en anglais) ; un ensemble d'interfaces 205 permettant au dispositif de communication de communiquer au sein dudit système, tel que décrit ci-dessus en relation avec la Fig. 1.

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le dispositif de communication est mis sous tension, le processeur 201 est capable de lire de la RAM 202 des instructions et de les exécuter. Ces instructions forment un programme d'ordinateur causant la mise en oeuvre, par le processeur 201, de tout ou partie des algorithmes et étapes décrits ci-après en relation avec le dispositif de communication concerné.

Tout ou partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

La Fig. 3 illustre schématiquement un algorithme, exécuté par chaque compteur électrique intelligent 120, pour transmettre des informations chiffrées à destination de l'entité de gestion 130. L'algorithme de la Fig. 3 concerne plus particulièrement des transmissions d'informations en mode « push », *i.e.* lorsque ledit compteur électrique intelligent 120 décide de pousser lesdites informations à destination de l'entité de gestion 130 sans avoir reçu préalablement de requête pour ce faire. Cela permet de simplifier les échanges protocolaires, puisque ni l'entité de gestion 130, ni le dispositif concentrateur de données 110 n'ont à redemander les informations en cas d'échec de transmission.

Préalablement à l'exécution de l'algorithme de la Fig. 3, ledit compteur électrique intelligent 120 crée, en relation avec l'entité de gestion 130 via le réseau de communication par courants porteurs en ligne 101, un contexte applicatif de chiffrement. Ce contexte applicatif de chiffrement, créé de manière cohérente au sein dudit compteur électrique intelligent 120 et de l'entité de gestion 130, permet d'utiliser des clefs de chiffrement/déchiffrement, d'authentification, de signature destinées à des opérations de sécurisation de données sur le réseau de communication par courants porteurs en ligne 101. Ces clefs sont donc partagées entre l'entité de gestion 130 et ledit compteur électrique intelligent 120. Ces clefs peuvent être pré-renseignées en usine, ou à l'installation, au sein dudit compteur électrique intelligent 120 et de l'entité de gestion 130 (en association avec un identifiant dudit compteur électrique intelligent 120). Ces clefs peuvent aussi en variante être échangées entre ledit compteur électrique intelligent 120 et l'entité de gestion 130, lors de l'établissement dudit contexte applicatif, selon des techniques connues de l'homme du métier.

Dans une étape 301, ledit compteur électrique intelligent 120 obtient des informations à transmettre à destination de l'entité de gestion 130. Par exemple, ces informations correspondent à un relevé de mesures de consommation énergétique de l'installation électrique que ledit compteur électrique intelligent 120 est en charge de surveiller. Préférentiellement, lesdites informations sont au format d'un message DLMS dénommé *DataNotification,* tel que défini dans le Livre Vert (« Green Book » en anglais) édité par l'association *DLMS User Association.*

Dans une étape 302 suivante, ledit compteur électrique intelligent 120 effectue un chiffrement des informations obtenues à l'étape 301 grâce au contexte applicatif de chiffrement défini via le réseau de communication par courants porteurs en ligne 101. Ce chiffrement constituera ultérieurement la partie utile (« payload » en anglais) d'une trame qui sera transmise soit via le réseau de collecte primaire, soit via le réseau de collecte secondaire.

Dans une étape 303 suivante, ledit compteur électrique intelligent 120 sélectionne un réseau de collecte parmi le réseau de collecte primaire, *i*.*e.* le réseau de communication par courants porteurs en ligne 101, et le réseau de collecte secondaire, *i.e.* le réseau de communication sans-fil 103 de type LPWAN.

Par défaut, le compteur électrique intelligent 120 sélectionne le réseau de collecte primaire. Cependant, des instabilités ou interférences peuvent nuire à la transmission des informations à destination de l'entité de gestion 130 via le réseau de communication par courants porteurs en ligne 101. Ainsi, le compteur électrique intelligent 120 bascule sur le réseau de collecte secondaire, suite à des dysfonctionnements de communication sur le réseau de collecte primaire.

Dans un mode de réalisation particulier, lorsque le réseau de communication par courants porteurs en ligne 101 est conforme aux spécifications PRIME, ledit compteur électrique intelligent 120 sélectionne le réseau de collecte secondaire, si ledit compteur électrique intelligent 120 ne parvient pas, au bout d'une durée prédéfinie Tl, à établir une connexion (plus particulièrement en application du standard IEC 61334-4-32, *Service Specific Convergence Sublayer*) avec le dispositif concentrateur de données 110 auquel ledit compteur électrique intelligent 120 est supposé être rattaché. Par exemple, ladite durée prédéfinie T1 est de douze heures.

Dans un autre mode de réalisation encore plus particulier, lorsque le réseau de communication par courants porteurs en ligne 101 est conforme aux spécifications PRIME, ledit compteur électrique intelligent 120 sélectionne le réseau de collecte secondaire, si ledit compteur électrique intelligent 120 ne parvient pas à obtenir un accusé de réception de la part de l'entité de gestion 130, au bout d'une durée prédéfinie T'1, bien qu'ayant réussi à établir une connexion (plus particulièrement en application du standard IEC 61334-4-32, *Service Specific Convergence Sublayer*) avec le dispositif concentrateur de données 110 auquel ledit compteur électrique intelligent 120 est supposé être rattaché. Par exemple, la durée prédéfinie T'1 est identique à la la durée prédéfinie T1.

Dans encore un autre mode de réalisation particulier, lorsque le réseau de communication par courants porteurs en ligne 101 est conforme au standard G3-PLC, ledit compteur électrique intelligent 120 sélectionne le réseau de collecte secondaire, si ledit compteur électrique intelligent 120 ne parvient pas à établir, au bout d'une durée prédéfinie T2, une route vers le dispositif concentrateur de données 110 auquel ledit compteur électrique intelligent 120 est supposé être rattaché. Par exemple, ladite durée prédéfinie T2 est d'une heure.

Lorsque ledit compteur électrique intelligent 120 a utilisé le réseau de collecte secondaire lors du dernier envoi précédent d'informations à destination de l'entité de gestion 130, ledit compteur électrique intelligent 120 sélectionne à nouveau le réseau de collecte primaire pour le nouvel envoi d'informations à destination de l'entité de gestion 130.

Dans une variante de réalisation, ledit compteur électrique intelligent 120 décide de sélectionner à nouveau le réseau de collecte primaire si une durée prédéfinie T3 est écoulée depuis que ledit compteur électrique intelligent 120 a basculé vers le réseau de collecte secondaire.

Dans une autre variante de réalisation, lorsque le réseau de communication par courants porteurs en ligne 101 est conforme aux spécifications PRIME, ledit compteur électrique intelligent 120 sélectionne à nouveau le réseau de collecte primaire, si ledit compteur électrique intelligent 120 parvient à établir une connexion (plus particulièrement en application du standard IEC 61334-4-32, *Service Specific Convergence Sublayer*) avec le dispositif concentrateur de données 110 auquel ledit compteur électrique intelligent 120 est supposé être rattaché.

Dans encore une autre variante de réalisation, lorsque le réseau de communication par courants porteurs en ligne 101 est conforme aux spécifications PRIME, ledit compteur électrique intelligent 120 sélectionne à nouveau le réseau de collecte primaire, si ledit compteur électrique intelligent 120 parvient à obtenir un accusé de réception de la part de l'entité de gestion 130.

Dans encore une autre variante de réalisation, lorsque le réseau de communication par courants porteurs en ligne 101 est conforme au standard G3-PLC, ledit compteur électrique intelligent 120 sélectionne à nouveau le réseau de collecte primaire, si ledit compteur électrique intelligent 120 parvient à établir une route vers le dispositif concentrateur de données 110 auquel ledit compteur électrique intelligent 120 est supposé être rattaché, alors que la raison de commutation sur le réseau secondaire était l'absence de route.

Dans encore une autre variante de réalisation, ledit compteur électrique intelligent 120 sélectionne à nouveau le réseau de collecte primaire, si ledit compteur électrique intelligent 120 détecte une déconnexion du réseau de collecte secondaire. Préférentiellement, ledit compteur électrique intelligent 120 attend, dans ce cas, une durée prédéfinie T4 avant d'effectuer une tentative de transmission desdites informations à destination de l'entité de gestion 130 via le réseau de collecte primaire. Par exemple, ladite durée prédéfinie T4 est d'une heure.

Dans un mode de réalisation particulier, le réseau de collecte secondaire est utilisé par l'entité de gestion 130 pour diffuser aux compteurs électriques intelligents 120 des informations de qualité de transmission relatives au réseau de collecte primaire. Ces informations de qualité de transmission sont fournies par chaque dispositif concentrateur de données 110 à l'entité de gestion 130 qui les diffuse ensuite, via le réseau de collecte secondaire, aux compteurs électriques intelligents 120 rattachés audit dispositif concentrateur de données 110. Ces informations de qualité de transmission sont alors utilisées par chaque compteur électrique intelligents 120 pour sélectionner le réseau de collecte à utiliser parmi le réseau de collecte primaire et ledit réseau de collecte secondaire. Ainsi, lorsque ces informations de qualité de transmission montrent des capacités insuffisantes pour permettre de contacter l'entité de gestion 130 via le réseau de collecte primaire, ledit compteur électrique intelligent 120 sélectionne le réseau de collecte secondaire, et sélectionne sinon le réseau de collecte primaire.

Dans une étape 304 suivante, ledit compteur électrique intelligent 120 encapsule les informations chiffrées à l'étape 302, d'une manière adaptée au réseau de collecte sélectionné à l'étape 303. Ledit compteur électrique intelligent 120 construit donc une trame ayant un entête (« header » en anglais) spécifique au réseau de collecte sélectionné à l'étape 303 et une partie utile (« payload » en anglais) constituée des informations chiffrées à l'étape 302. Cela signifie que, bien que les clefs de chiffrement/déchiffrement soient destinées à des opérations de sécurisation de données sur le réseau de communication par courants porteurs en ligne 101, lesdites clefs sont aussi utilisées en cas d'envoi desdites informations via le réseau de communication sans-fil 103 de type LPWAN. Le chiffrement desdites informations à transmettre à l'entité de gestion 130 est donc indépendant du réseau de collecte effectivement utilisé pour transporter lesdites informations chiffrées à destination de l'entité de gestion 130.

Dans une étape 305 suivante, ledit compteur électrique intelligent 120 transmet la trame créée à l'étape 304 via le réseau de collecte sélectionné à l'étape 303.

La Fig. 4 illustre schématiquement un algorithme, exécuté par chaque concentrateur de données 110, pour servir de relais entre les compteurs électriques intelligents 120 qui lui sont rattachés et l'entité de gestion 130. La Fig. 4 illustre aussi schématiquement un algorithme, exécuté par chaque passerelle de collecte 150, pour servir de relais entre les compteurs électriques intelligents 120 qui lui sont rattachés et l'entité de gestion 130. La Fig. 4 illustre aussi schématiquement un algorithme, exécuté par le serveur LPWAN 140, pour servir de relais entre les passerelles de collecte 150 et l'entité de gestion 130.

Considérons tout d'abord que l'algorithme de la Fig. 4 est exécuté par chaque concentrateur de données 110.

Dans une étape 401, ledit concentrateur de données 110 reçoit des informations chiffrées en provenance d'un des compteurs électriques intelligents 120 qui lui sont rattachés. Les informations chiffrées sont encapsulées dans une trame adaptée au réseau de communication par courants porteurs en ligne 101.

Dans une étape 402 suivante, ledit concentrateur de données 110 dés-encapsule les informations chiffrées et les ré-encapsule dans une trame adaptée au réseau de communication 102. Puis, ledit concentrateur de données 110 transmet, sur le réseau de communication 102, la trame ainsi obtenue. Aucune opération de déchiffrement desdites informations que ledit compteur électrique intelligent 120 a souhaité transmettre à l'entité de gestion 130 n'est effectuée par ledit concentrateur de données 110.

Considérons maintenant que l'algorithme de la Fig. 4 est exécuté par chaque passerelle de collecte 150.

Dans l'étape 401, ladite passerelle de collecte 150 reçoit des informations chiffrées en provenance d'un des compteurs électriques intelligents 120 qui lui sont rattachés. Les informations chiffrées sont encapsulées dans une trame adaptée au réseau de communication 103 de type LPWAN.

Dans l'étape 402, ladite passerelle de collecte 150 dés-encapsule les informations chiffrées et les ré-encapsule dans une trame adaptée au réseau de communication 104. Puis, ladite passerelle de collecte 150 transmet, sur le réseau de communication 104, la trame ainsi obtenue. Aucune opération de déchiffrement desdites informations que ledit compteur électrique intelligent 120 a souhaité transmettre à l'entité de gestion 130 n'est effectuée par ladite passerelle de collecte 150.

Considérons maintenant que l'algorithme de la Fig. 4 est exécuté par le serveur LPWAN 140.

Dans l'étape 401, le serveur LPWAN 140 reçoit des informations chiffrées, à l'origine en provenance d'un compteur électriques intelligents 120, qui ont été relayées par une passerelle de collecte 150. Les informations chiffrées sont encapsulées dans une trame adaptée au réseau de communication 104.

Dans l'étape 402, le serveur LPWAN 140 dés-encapsule les informations chiffrées et les ré-encapsule dans une trame adaptée au réseau de communication 105. Puis, le serveur LPWAN 140 transmet, sur le réseau de communication 105, la trame ainsi obtenue. Aucune opération de déchiffrement desdites informations que ledit compteur électrique intelligent 120 a souhaité transmettre à l'entité de gestion 130 n'est effectuée par le serveur LPWAN 140. Les systèmes de communication basés sur des technologies LPWAN permettent typiquement de chiffrer les parties utiles des données qui transitent via les passerelles LPWAN comme les passerelles de collecte 150. Des clefs de chiffrement/déchiffrement, d'authentification, de signature destinées aux transmissions LPWAN sont alors utilisées. Le serveur LPWAN 140 est alors apte à déchiffrer lesdites données. Dans le cadre de la présente invention, le fait d'utiliser dans le cadre des transmissions LPWAN des parties utiles de trames chiffrées avec des clefs destinées aux transmissions sur le réseau de communication par courants porteurs en ligne 101 permet d'éviter que le serveur LPWAN 140 soit apte à déchiffrer lesdites informations que les compteurs électriques intelligents 120 souhaitent transmettre à l'entité de gestion 130. Le chiffrement LPWAN est alors désactivé, e.g. lorsque le réseau de communication sans-fil 103 est un réseau étendu à longue portée LoRaWan, la clef dénommée *AppSKey* n'est pas utilisée. La confidentialité de ces informations s'en trouve maintenue, à moindre coût en termes de traitement et en termes de sécurisation du serveur LPWAN 140 (le serveur LPWAN 140 est typiquement géré par un autre opérateur que l'entité de gestion 130).

La Fig. 5 illustre schématiquement un algorithme, exécuté par l'entité de gestion 130, pour traiter les informations chiffrées en provenance des compteurs électriques intelligents 120.

Dans une étape 501, l'entité de gestion 130 reçoit des informations chiffrées en provenance d'un des compteurs électriques intelligents 120. Ces informations chiffrées ont transité soit via le réseau de communication 102 et donc via le réseau de communication par courants porteurs en ligne 101, soit via le réseau de communication 105 et donc via le réseau de collecte secondaire.

Dans une étape 502 suivante, l'entité de gestion 130 dés-encapsule les informations chiffrées et déchiffre lesdites informations grâce auxdites clefs destinées à être utilisées pour des transmissions de données via le réseau de communication par courants porteurs en ligne 101, sans tenir compte du fait que lesdites informations lui soient parvenues via le réseau de communication 102 et donc via le réseau de communication par courants porteurs en ligne 101, ou via le réseau de communication 105 et donc via le réseau de collecte secondaire.

Dans une étape 503 suivante, l'entité de gestion 130 acquitte lesdites informations auprès du compteur électrique intelligent 120 les ayant émis, en utilisant le réseau de collecte qui a été utilisé par ledit compteur électrique intelligent 120 pour les transmettre. L'entité de gestion 130 traite alors les informations qui ont été transmises par ledit compteur électrique intelligent 120.

## Revendications

1. Procédé pour transmettre des informations chiffrées à une entité de gestion (130) dans un système de communication comportant en outre au moins un dispositif concentrateur de données (110) auquel sont rattachés des compteurs électriques intelligents (120) via un premier réseau de communication par courants porteurs en ligne (101), chaque dispositif concentrateur de données étant connecté à l'entité de gestion via un second réseau de communication (102) et servant de relais sans déchiffrement de partie utile de trame entre lesdits compteurs électriques intelligents et l'entité de gestion,
**caractérisé en ce que** le système de communication comporte en outre au moins une passerelle de collecte (150) à laquelle sont rattachés des compteurs électriques intelligents via un troisième réseau de communication de type LPWAN (103), ainsi qu'un serveur (140) connecté à chaque passerelle de collecte par un quatrième réseau de communication (104) et à l'entité de gestion par un cinquième réseau de communication (105), chaque passerelle de collecte servant de relais sans déchiffrement de partie utile de trame entre lesdits compteurs électriques intelligents et le serveur, le serveur servant de relais sans déchiffrement de partie utile de trame entre chaque passerelle de collecte et l'entité de gestion, et **en ce que** chaque compteur électrique intelligent souhaitant transmettre lesdites informations à l'entité de gestion effectue les étapes suivantes :
- chiffrer (302) lesdites informations à l'aide de clefs partagées avec l'entité de gestion dans le cadre d'un contexte applicatif de chiffrement établi via le premier réseau de communication et destinées à des opérations de sécurisation de données sur le premier réseau de communication ;
- sélectionner (303) par défaut le premier réseau de communication et basculer (303) sur le troisième réseau de communication, suite à des dysfonctionnements du premier réseau de communication ; et
- transmettre (304, 305) une trame à destination de l'entité de gestion via le réseau de communication sélectionné, la trame étant telle que sa partie utile est constituée desdites informations chiffrées, de sorte que lesdites informations sont chiffrées indépendamment du réseau de communication effectivement sélectionné.

2. Procédé selon la revendication 1, **caractérisé en ce que** le troisième réseau de communication est un réseau étendu à longue portée de type LoRaWAN.

3. Procédé selon l'une quelconque des revendications 1 et 2, **caractérisé en ce que**, le premier réseau de communication étant conforme aux spécifications PRIME, ledit compteur électrique intelligent bascule sur le troisième réseau de communication, lorsque ledit compteur électrique intelligent ne parvient pas, au bout d'une première durée prédéfinie, à établir une connexion au sens du standard IEC 61334-4-32 avec ledit dispositif concentrateur de données.

4. Procédé selon la revendication 3, **caractérisé en ce que** ledit compteur électrique intelligent sélectionne à nouveau le premier réseau de communication, lorsque ledit compteur électrique intelligent parvient à établir une connexion au sens du standard IEC 61334-4-32 avec ledit dispositif concentrateur de données.

5. Procédé selon l'une quelconque des revendications 3 et 4, **caractérisé en ce que** ledit compteur électrique intelligent bascule sur le troisième réseau de communication, lorsque ledit compteur électrique intelligent ne parvient pas à obtenir un accusé de réception de la part de l'entité de gestion, au bout d'une seconde durée prédéfinie, bien qu'ayant réussi à établir une connexion au sens du standard IEC 61334-4-32 avec ledit dispositif concentrateur de données.

6. Procédé selon la revendication 5, **caractérisé en ce que** ledit compteur électrique intelligent sélectionne à nouveau le premier réseau de communication, lorsque ledit compteur électrique intelligent parvient à obtenir un accusé de réception de la part de l'entité de gestion.

7. Procédé selon l'une quelconque des revendications 1 et 2, **caractérisé en ce que**, le premier réseau de communication étant conforme au standard G3-PLC, ledit compteur électrique intelligent bascule sur le troisième réseau de communication, lorsque ledit compteur électrique intelligent ne parvient pas à établir, au bout d'une troisième durée prédéfinie, une route vers le dispositif concentrateur.

8. Procédé selon la revendication 7, **caractérisé en ce que** ledit compteur électrique intelligent sélectionne à nouveau le premier réseau de communication, lorsque ledit compteur électrique intelligent parvient à établir une route vers le dispositif concentrateur.

9. Procédé selon l'une quelconque des revendications 1 et 2, **caractérisé en ce que** ledit compteur électrique intelligent sélectionne à nouveau le premier réseau de communication lorsqu'une quatrième durée prédéfinie est écoulée depuis que ledit compteur électrique intelligent a basculé vers le troisième réseau de communication.

10. Procédé selon l'une quelconque des revendications 1 et 2, **caractérisé en ce que**, lorsque ledit compteur électrique intelligent a basculé sur le troisième réseau de communication lors du dernier envoi précédent à destination de l'entité de gestion, ledit compteur électrique intelligent sélectionne à nouveau le premier réseau de communication pour l'envoi desdites informations à destination de l'entité de gestion.

11. Procédé selon l'une quelconque des revendications 1 à 9, **caractérisé en ce que** ledit compteur électrique intelligent sélectionne à nouveau le premier réseau de communication, lorsque ledit compteur électrique intelligent détecte une déconnexion du troisième réseau de communication.

12. Procédé selon la revendication 11, **caractérisé en ce que**, en sélectionnant à nouveau le premier réseau de communication, ledit compteur électrique intelligent attend une cinquième durée prédéfinie avant d'effectuer une tentative de transmission desdites informations à destination de l'entité de gestion via le premier réseau de communication.

13. Procédé selon l'une quelconque des revendications 1 à 12, **caractérisé en ce que** le troisième réseau de communication est utilisé par l'entité de gestion pour diffuser aux compteurs électriques intelligents des informations de qualité de transmission relatives au premier réseau de communication, utilisées afin de sélectionner le réseau de communication à utiliser parmi le premier réseau de communication et le troisième réseau de communication.

14. Système de communication comportant une entité de gestion (130) à laquelle des informations chiffrées doivent être transmises et au moins un dispositif concentrateur de données (110) auquel sont rattachés des compteurs électriques intelligents (120) via un premier réseau de communication par courants porteurs en ligne (101), chaque dispositif concentrateur de données étant connecté à l'entité de gestion via un second réseau de communication (102) et servant de relais sans déchiffrement de partie utile de trame entre lesdits compteurs électriques intelligents et l'entité de gestion,
**caractérisé en ce que** le système de communication comporte en outre au moins une passerelle de collecte (150) à laquelle sont rattachés des compteurs électriques intelligents via un troisième réseau de communication de type LPWAN (103), ainsi qu'un serveur (140) connecté à chaque passerelle de collecte par un quatrième réseau de communication (104) et à l'entité de gestion par un cinquième réseau de communication (105), chaque passerelle de collecte servant de relais sans déchiffrement de partie utile de trame entre lesdits compteurs électriques intelligents et le serveur, le serveur servant de relais sans déchiffrement de partie utile de trame entre chaque passerelle de collecte et l'entité de gestion, et **en ce que** chaque compteur électrique intelligent souhaitant transmettre lesdites informations à l'entité de gestion implémente :
- des moyens pour chiffrer (302) lesdites informations à l'aide de clefs partagées avec l'entité de gestion dans le cadre d'un contexte applicatif de chiffrement établi via le premier réseau de communication et destinées à des opérations de sécurisation de données sur le premier réseau de communication ;
- des moyens pour sélectionner (303) par défaut le premier réseau de communication et basculer (303) sur le troisième réseau de communication, suite à des dysfonctionnements du premier réseau de communication ; et
- des moyens transmettre (304, 305) une trame à destination de l'entité de gestion via le réseau de communication sélectionné, la trame étant telle que sa partie utile est constituée desdites informations chiffrées, de sorte que lesdites informations sont chiffrées indépendamment du réseau de communication effectivement sélectionné.

15. Procédé implémenté par un compteur électrique intelligent (120) pour transmettre des informations chiffrées à une entité de gestion (130) dans un système de communication comportant en outre au moins un dispositif concentrateur de données (110) auquel est rattaché le compteur électrique intelligent (120) via un premier réseau de communication par courants porteurs en ligne (101), chaque dispositif concentrateur de données étant connecté à l'entité de gestion via un second réseau de communication (102) et servant de relais sans déchiffrement de partie utile de trame entre ledit compteur électrique intelligent et l'entité de gestion,
**caractérisé en ce que**, le système de communication comportant en outre au moins une passerelle de collecte (150) à laquelle est rattaché ledit compteur électrique intelligent via un troisième réseau de communication de type LPWAN (103), ainsi qu'un serveur (140) connecté à chaque passerelle de collecte par un quatrième réseau de communication (104) et à l'entité de gestion par un cinquième réseau de communication (105), chaque passerelle de collecte servant de relais sans déchiffrement de partie utile de trame entre lesdits compteurs électriques intelligents et le serveur, le serveur servant de relais sans déchiffrement de partie utile de trame entre chaque passerelle de collecte et l'entité de gestion, ledit compteur électrique intelligent souhaitant transmettre lesdites informations à l'entité de gestion effectue les étapes suivantes :
- chiffrer (302) lesdites informations à l'aide de clefs partagées avec l'entité de gestion dans le cadre d'un contexte applicatif de chiffrement établi via le premier réseau de communication et destinées à des opérations de sécurisation de données sur le premier réseau de communication ;
- sélectionner (303) par défaut le premier réseau de communication et basculer (303) sur le troisième réseau de communication, suite à des dysfonctionnements du premier réseau de communication ; et
- transmettre (304, 305) une trame à destination de l'entité de gestion via le réseau de communication sélectionné, la trame étant telle que sa partie utile est constituée desdites informations chiffrées, de sorte que lesdites informations sont chiffrées indépendamment du réseau de communication effectivement sélectionné.

16. Produit programme d'ordinateur, **caractérisé en ce qu'**il comporte des instructions entraînant l'exécution du procédé selon la revendication 15, lorsque lesdites instructions sont exécutées par un processeur.

17. Support de stockage d'informations, **caractérisé en ce qu'**il stocke un programme d'ordinateur comportant des instructions entraînant l'exécution du procédé selon la revendication 15, lorsque lesdites instructions sont exécutées par un processeur.

18. Compteur électrique intelligent (120) configuré pour transmettre des informations chiffrées à une entité de gestion (130) dans un système de communication comportant en outre au moins un dispositif concentrateur de données (110) auquel est rattaché le compteur électrique intelligent (120) via un premier réseau de communication par courants porteurs en ligne (101), chaque dispositif concentrateur de données étant connecté à l'entité de gestion via un second réseau de communication (102) et servant de relais sans déchiffrement de partie utile de trame entre ledit compteur électrique intelligent et l'entité de gestion,
**caractérisé en ce que**, le système de communication comportant en outre au moins une passerelle de collecte (150) à laquelle est rattaché ledit compteur électrique intelligent via un troisième réseau de communication de type LPWAN (103), ainsi qu'un serveur (140) connecté à chaque passerelle de collecte par un quatrième réseau de communication (104) et à l'entité de gestion par un cinquième réseau de communication (105), chaque passerelle de collecte servant de relais sans déchiffrement de partie utile de trame entre lesdits compteurs électriques intelligents et le serveur, le serveur servant de relais sans déchiffrement de partie utile de trame entre chaque passerelle de collecte et l'entité de gestion, ledit compteur électrique intelligent souhaitant transmettre lesdites informations à l'entité de gestion comporte :
- des moyens pour chiffrer (302) lesdites informations à l'aide de clefs partagées avec l'entité de gestion dans le cadre d'un contexte applicatif de chiffrement établi via le premier réseau de communication et destinées à des opérations de sécurisation de données sur le premier réseau de communication ;
- des moyens pour sélectionner (303) par défaut le premier réseau de communication et basculer (303) sur le troisième réseau de communication, suite à des dysfonctionnements du premier réseau de communication ; et
- des moyens pour transmettre (304, 305) une trame à destination de l'entité de gestion via le réseau de communication sélectionné, la trame étant telle que sa partie utile est constituée desdites informations chiffrées, de sorte que lesdites informations sont chiffrées indépendamment du réseau de communication effectivement sélectionné.

## Patentansprüche

1. Verfahren zur Übertragung von verschlüsselten Informationen an eine Steuereinheit (130) in einem Kommunikationssystem, umfassend außerdem mindestens eine Datenkonzentratorvorrichtung (110), mit der intelligente Stromzähler (120) über ein erstes Kommunikationsnetz durch leitungsgebundene Trägerströme (101) verbunden sind, wobei jede Datenkonzentratorvorrichtung mit der Steuereinheit über ein zweites Kommunikationsnetz (102) verbunden ist und als Relais ohne Entschlüsselung des Nutzteils des Rahmens zwischen den intelligenten Stromzählern und der Steuereinheit dient,
**dadurch gekennzeichnet, dass** das Kommunikationssystem außerdem mindestens ein Sammel-Gateway (150) umfasst, mit dem die intelligenten Stromzähler über ein drittes Kommunikationsnetz vom LPWAN-Typ (103) verbunden sind, sowie einen Server (140), der mit jedem Sammel-Gateway durch ein viertes Kommunikationsnetz (104) und mit der Steuereinheit durch ein fünftes Kommunikationsnetz (105) verbunden ist, wobei jedes Sammel-Gateway als Relais ohne Entschlüsselung des Nutzteils des Rahmens zwischen den intelligenten Stromzählern und dem Server dient, wobei der Server als Relais ohne Entschlüsselung des Nutzteils des Rahmens zwischen jedem Sammel-Gateway und der Steuereinheit dient, und dadurch, dass jeder intelligente Stromzähler, der die Informationen an die Steuereinheit zu übertragen wünscht, die folgenden Schritte durchführt:
- Verschlüsseln (302) der Informationen mit Hilfe von Schlüsseln, die mit der Steuereinheit gemeinsam genutzt werden, im Rahmen eines Verschlüsselungsanwendungskontexts, der über das erste Kommunikationsnetz festgelegt wird, und die für Datensicherungsoperationen in dem ersten Kommunikationsnetz bestimmt sind;
- standardmäßiges Auswählen (303) des ersten Kommunikationsnetzes und Umschalten (303) zu dem dritten Kommunikationsnetz nach Fehlfunktionen des ersten Kommunikationsnetzes; und
- Übertragen (304, 305) eines Rahmens an die Steuereinheit über das ausgewählte Kommunikationsnetz, wobei der Rahmen derart ist, dass sein Nutzteil aus den verschlüsselten Informationen besteht, damit die Informationen unabhängig von dem effektiv ausgewählten Kommunikationsnetz verschlüsselt werden.

2. Verfahren nach Anspruch 1,
**dadurch gekennzeichnet, dass** das dritte Kommunikationsnetz ein erweitertes Netz mit großer Reichweite vom LoRaWAN-Typ ist.

3. Verfahren nach einem der Ansprüche 1 und 2,
**dadurch gekennzeichnet, dass**, wenn das erste Kommunikationsnetz den PRIME-Spezifikationen entspricht, der intelligente Stromzähler zu dem dritten Kommunikationsnetz umschaltet, wenn es dem intelligenten Stromzähler, am Ende einer ersten vordefinierten Dauer, nicht gelingt, eine Verbindung im Sinne des Standards IEC 61334-4-32 mit der Datenkonzentratorvorrichtung herzustellen.

4. Verfahren nach Anspruch 3,
**dadurch gekennzeichnet, dass** der intelligente Stromzähler erneut das erste Kommunikationsnetz auswählt, wenn es dem intelligenten Stromzähler gelingt, eine Verbindung im Sinne des Standards IEC 61334-4-32 mit der Datenkonzentratorvorrichtung herzustellen.

5. Verfahren nach einem der Ansprüche 3 und 4,
**dadurch gekennzeichnet, dass** der intelligente Stromzähler zu dem dritten Kommunikationsnetz umschaltet, wenn es dem intelligenten Stromzähler nicht gelingt, eine Empfangsbestätigung von der Steuereinheit zu erhalten, am Ende einer zweiten vordefinierten Dauer, sowie bevor es diesem gelungen ist, eine Verbindung im Sinne des Standards IEC 61334-4-32 mit der Datenkonzentratorvorrichtung herzustellen.

6. Verfahren nach Anspruch 5,
**dadurch gekennzeichnet, dass** der intelligente Stromzähler erneut das erste Kommunikationsnetz auswählt, wenn es dem intelligenten Stromzähler gelingt, eine Empfangsbestätigung von der Steuereinheit zu erhalten.

7. Verfahren nach einem der Ansprüche 1 und 2,
**dadurch gekennzeichnet, dass**, wenn das erste Kommunikationsnetz dem Standard G3-PLC entspricht, der intelligente Stromzähler zu dem dritten Kommunikationsnetz umschaltet, wenn es dem intelligenten Stromzähler, am Ende einer dritten vordefinierten Dauer, nicht gelingt, am Ende einer dritten vordefinierten Dauer, einen Weg zu dem Datenkonzentrator herzustellen.

8. Verfahren nach Anspruch 7,
**dadurch gekennzeichnet, dass** der intelligente Stromzähler erneut das erste Kommunikationsnetz auswählt, wenn es dem intelligenten Stromzähler gelingt, einen Weg zu dem Datenkonzentrator herzustellen.

9. Verfahren nach einem der Ansprüche 1 und 2,
**dadurch gekennzeichnet, dass** der intelligente Stromzähler erneut das erste Kommunikationsnetz auswählt, wenn eine vierte vordefinierte Dauer verstrichen ist, seit der intelligente Stromzähler zu dem dritten Kommunikationsnetz umgeschaltet hat.

10. Verfahren nach einem der Ansprüche 1 und 2,
**dadurch gekennzeichnet, dass**, wenn der intelligente Stromzähler zu dem dritten Kommunikationsnetz beim letzten vorhergehenden Senden an die Steuereinheit umgeschaltet hat, der intelligente Stromzähler erneut das erste Kommunikationsnetz zum Senden der Informationen an die Steuereinheit auswählt.

11. Verfahren nach einem der Ansprüche 1 bis 9,
**dadurch gekennzeichnet, dass** der intelligente Stromzähler erneut das erste Kommunikationsnetz auswählt, wenn der intelligente Stromzähler ein Trennen von dem dritten Kommunikationsnetz detektiert.

12. Verfahren nach Anspruch 11,
**dadurch gekennzeichnet, dass**, beim erneuten Auswählen des ersten Kommunikationsnetzes, der intelligente Stromzähler eine fünfte vordefinierte Dauer abwartet, bevor er einen Versuch zur Übertragung der Informationen an die Steuereinheit über das erste Kommunikationsnetz unternimmt.

13. Verfahren nach einem der Ansprüche 1 bis 12,
**dadurch gekennzeichnet, dass** das dritte Kommunikationsnetz von der Steuereinheit verwendet wird, um an die intelligenten Stromzähler Informationen über die Qualität der Übertragung in Bezug auf das erste Kommunikationsnetz zu verteilen, die verwendet werden, um das Kommunikationsnetz von dem ersten Kommunikationsnetz und dem dritten Kommunikationsnetz auszuwählen, das zu verwenden ist.

14. Kommunikationssystem, umfassend eine Steuereinheit (130), an die verschlüsselte Informationen übertragen werden müssen, und mindestens eine Datenkonzentratorvorrichtung (110), mit der intelligente Stromzähler (120) über ein erstes Kommunikationsnetz durch leitungsgebundene Trägerströme (101) verbunden sind, wobei jede Datenkonzentratorvorrichtung mit der Steuereinheit über ein zweites Kommunikationsnetz (102) verbunden ist und als Relais ohne Entschlüsselung des Nutzteils des Rahmens zwischen den intelligenten Stromzählern und der Steuereinheit dient,
**dadurch gekennzeichnet, dass** das Kommunikationssystem außerdem mindestens ein Sammel-Gateway (150) umfasst, mit dem die intelligenten Stromzähler über ein drittes Kommunikationsnetz vom LPWAN-Typ (103) verbunden sind, sowie einen Server (140), der mit jedem Sammel-Gateway durch ein viertes Kommunikationsnetz (104) und mit der Steuereinheit durch ein fünftes Kommunikationsnetz (105) verbunden ist, wobei jedes Sammel-Gateway als Relais ohne Entschlüsselung des Nutzteils des Rahmens zwischen den intelligenten Stromzählern und dem Server dient, wobei der Server als Relais ohne Entschlüsselung des Nutzteils des Rahmens zwischen jedem Sammel-Gateway und der Steuereinheit dient, und dadurch, dass jeder intelligente Stromzähler, der die Informationen an die Steuereinheit zu übertragen wünscht, implementiert:
- Mittel zum Verschlüsseln (302) der Informationen mit Hilfe von Schlüsseln, die mit der Steuereinheit gemeinsam genutzt werden, im Rahmen eines Verschlüsselungsanwendungskontexts, der über das erste Kommunikationsnetz festgelegt wird, und die für Datensicherungsoperationen in dem ersten Kommunikationsnetz bestimmt sind;
- Mittel zum standardmäßigen Auswählen (303) des ersten Kommunikationsnetzes und Umschalten (303) zu dem dritten Kommunikationsnetz nach Fehlfunktionen des ersten Kommunikationsnetzes; und
- Mittel zum Übertragen (304, 305) eines Rahmens an die Steuereinheit über das ausgewählte Kommunikationsnetz, wobei der Rahmen derart ist, dass sein Nutzteil aus den verschlüsselten Informationen besteht, damit die Informationen unabhängig von dem effektiv ausgewählten Kommunikationsnetz verschlüsselt werden.

15. Verfahren, welches durch einen intelligenten Stromzähler (120) implementiert wird, zur Übertragung von verschlüsselten Informationen an eine Steuereinheit (130) in einem Kommunikationssystem, umfassend außerdem mindestens eine Datenkonzentratorvorrichtung (110), mit welcher der intelligente Stromzähler (120) über ein erstes Kommunikationsnetz durch leitungsgebundene Trägerströme (101) verbunden ist, wobei jede Datenkonzentratorvorrichtung mit der Steuereinheit über ein zweites Kommunikationsnetz (102) verbunden ist und als Relais ohne Entschlüsselung des Nutzteils des Rahmens zwischen dem intelligenten Stromzähler und der Steuereinheit dient,
**dadurch gekennzeichnet, dass** das Kommunikationssystem außerdem mindestens ein Sammel-Gateway (150) umfasst, mit dem der intelligente Stromzähler über ein drittes Kommunikationsnetz vom LPWAN-Typ (103) verbunden ist, sowie einen Server (140), der mit jedem Sammel-Gateway durch ein viertes Kommunikationsnetz (104) und mit der Steuereinheit durch ein fünftes Kommunikationsnetz (105) verbunden ist, wobei jedes Sammel-Gateway als Relais ohne Entschlüsselung des Nutzteils des Rahmens zwischen den intelligenten Stromzählern und dem Server dient, wobei der Server als Relais ohne Entschlüsselung des Nutzteils des Rahmens zwischen jedem Sammel-Gateway und der Steuereinheit dient, und dadurch, dass jeder intelligente Stromzähler, der die Informationen an die Steuereinheit zu übertragen wünscht, die folgenden Schritte durchführt:
- Verschlüsseln (302) der Informationen mit Hilfe von Schlüsseln, die mit der Steuereinheit gemeinsam genutzt werden, im Rahmen eines Verschlüsselungsanwendungskontexts, der über das erste Kommunikationsnetz festgelegt wird, und die für Datensicherungsoperationen in dem ersten Kommunikationsnetz bestimmt sind;
- standardmäßiges Auswählen (303) des ersten Kommunikationsnetzes und Umschalten (303) zu dem dritten Kommunikationsnetz nach Fehlfunktionen des ersten Kommunikationsnetzes; und
- Übertragen (304, 305) eines Rahmens an die Steuereinheit über das ausgewählte Kommunikationsnetz, wobei der Rahmen derart ist, dass sein Nutzteil aus den verschlüsselten Informationen besteht, damit die Informationen unabhängig von dem effektiv ausgewählten Kommunikationsnetz verschlüsselt werden.

16. Computerprogrammprodukt,
**dadurch gekennzeichnet, dass** dieses Instruktionen umfasst, welche die Ausführung des Verfahrens nach Anspruch 15 bewirken, wenn die Instruktionen von einem Prozessor ausgeführt werden.

17. Informationsspeichermedium,
**dadurch gekennzeichnet, dass** dieses ein Computerprogramm speichert, das Instruktionen umfasst, welche die Ausführung des Verfahrens nach Anspruch 15 bewirken, wenn die Instruktionen von einem Prozessor ausgeführt werden.

18. Intelligenter Stromzähler (120), welcher ausgelegt ist, verschlüsselte Informationen an eine Steuereinheit (130) in einem Kommunikationssystem zu übertragen, das außerdem mindestens eine Datenkonzentratorvorrichtung (110) umfasst, mit welcher der intelligente Stromzähler (120) über ein erstes Kommunikationsnetz durch leitungsgebundene Trägerströme (101) verbunden ist, wobei jede Datenkonzentratorvorrichtung mit der Steuereinheit über ein zweites Kommunikationsnetz (102) verbunden ist und als Relais ohne Entschlüsselung des Nutzteils des Rahmens zwischen dem intelligenten Stromzähler und der Steuereinheit dient,
**dadurch gekennzeichnet, dass** das Kommunikationssystem außerdem mindestens ein Sammel-Gateway (150) umfasst, mit dem der intelligente Stromzähler über ein drittes Kommunikationsnetz vom LPWAN-Typ (103) verbunden ist, sowie einen Server (140), der mit jedem Sammel-Gateway durch ein viertes Kommunikationsnetz (104) und mit der Steuereinheit durch ein fünftes Kommunikationsnetz (105) verbunden ist, wobei jedes Sammel-Gateway als Relais ohne Entschlüsselung des Nutzteils des Rahmens zwischen den intelligenten Stromzählern und dem Server dient, wobei der Server als Relais ohne Entschlüsselung des Nutzteils des Rahmens zwischen jedem Sammel-Gateway und der Steuereinheit dient, wobei der intelligente Stromzähler, der die Informationen an die Steuereinheit zu übertragen wünscht, umfasst:
- Mittel zum Verschlüsseln (302) der Informationen mit Hilfe von Schlüsseln, die mit der Steuereinheit gemeinsam genutzt werden, im Rahmen eines Verschlüsselungsanwendungskontexts, der über das erste Kommunikationsnetz festgelegt wird, und die für Datensicherungsoperationen in dem ersten Kommunikationsnetz bestimmt sind;
- Mittel zum standardmäßigen Auswählen (303) des ersten Kommunikationsnetzes und Umschalten (303) zu dem dritten Kommunikationsnetz nach Fehlfunktionen des ersten Kommunikationsnetzes; und
- Mittel zum Übertragen (304, 305) eines Rahmens an die Steuereinheit über das ausgewählte Kommunikationsnetz, wobei der Rahmen derart ist, dass sein Nutzteil aus den verschlüsselten Informationen besteht, damit die Informationen unabhängig von dem effektiv ausgewählten Kommunikationsnetz verschlüsselt werden.

## Claims

1. Method for transmitting encrypted information to a management entity (130) in a communication system furthermore including at least one data concentrator device (110) to which smart electricity meters (120) are attached via a first powerline communication network (101), each data concentrator device being connected to the management entity via a second communication network (102) and serving as a relay, without decrypting a useful frame part, between said smart electricity meters and the management entity,
**characterized in that** the communication system furthermore includes at least one collection gateway (150) to which smart electricity meters are attached via a third communication network of LPWAN type (103), and a server (140) connected to each collection gateway by a fourth communication network (104) and to the management entity by a fifth communication network (105), each collection gateway serving as a relay, without decrypting a useful frame part, between said smart electricity meters and the server, the server serving as a relay, without decrypting a useful frame part, between each collection gateway and the management entity, and **in that** each smart electricity meter wishing to transmit said information to the management entity performs the following steps:
- encrypting (302) said information using keys that are shared with the management entity in the framework of an encryption application context established via the first communication network and that are intended for data security operations on the first communication network;
- selecting (303) by default the first communication network and switching (303) to the third communication network following malfunctions of the first communication network; and
- transmitting (304, 305) a frame to the management entity via the selected communication network, the frame being such that its useful part is formed of said encrypted information, such that said information is encrypted independently of the communication network that is effectively selected.

2. Method according to Claim 1, **characterized in that** the third communication network is a long-range wide-area network of LoRaWAN type.

3. Method according to either one of Claims 1 and 2, **characterized in that**, the first communication network being in accordance with the PRIME specifications, said smart electricity meter switches to the third communication network when said smart electricity meter does not manage, after a first predefined duration, to establish a connection within the meaning of the IEC 61334-4-32 standard with said data concentrator device.

4. Method according to Claim 3, **characterized in that** said smart electricity meter selects the first communication network again when said smart electricity meter manages to establish a connection within the meaning of the IEC 61334-4-32 standard with said data concentrator device.

5. Method according to either one of Claims 3 and 4, **characterized in that** said smart electricity meter switches to the third communication network when said smart electricity meter does not manage to obtain an acknowledgement of receipt from the management entity, after a second predefined duration, of having successfully managed to establish a connection within the meaning of the IEC 61334-4-32 standard with said data concentrator device.

6. Method according to Claim 5, **characterized in that** said smart electricity meter selects the first communication network again when said smart electricity meter manages to obtain an acknowledgement of receipt from the management entity.

7. Method according to either one of Claims 1 and 2, **characterized in that**, the first communication network being in accordance with the G3-PLC standard, said smart electricity meter switches to the third communication network when said smart electricity meter does not manage to establish, after a third predefined duration, a route to the concentrator device.

8. Method according to Claim 7, **characterized in that** said smart electricity meter selects the first communication network again when said smart electricity meter manages to establish a route to the concentrator device.

9. Method according to either one of Claims 1 and 2, **characterized in that** said smart electricity meter selects the first communication network again when a fourth predefined duration has elapsed since said smart electricity meter switched to the third communication network.

10. Method according to either one of Claims 1 and 2, **characterized in that**, when said smart electricity meter has switched to the third communication network during the last previous sending to the management entity, said smart electricity meter selects the first communication network again to send said information to the management entity.

11. Method according to any one of Claims 1 to 9, **characterized in that** said smart electricity meter selects the first communication network again when said smart electricity meter detects disconnection of the third communication network.

12. Method according to Claim 11, **characterized in that**, when selecting the first communication network again, said smart electricity meter waits a fifth predefined duration before making an attempt to transmit said information to the management entity via the first communication network.

13. Method according to any one of Claims 1 to 12, **characterized in that** the third communication network is used by the management entity to broadcast, to the smart electricity meters, transmission quality information relating to the first communication network, which information is used to select the communication network to be used from among the first communication network and the third communication network.

14. Communication system including a management entity (130) to which encrypted information has to be transmitted and at least one data concentrator device (110) to which smart electricity meters (120) are attached via a first powerline communication network (101), each data concentrator device being connected to the management entity via a second communication network (102) and serving as a relay, without decrypting a useful frame part, between said smart electricity meters and the management entity,
**characterized in that** the communication system furthermore includes at least one collection gateway (150) to which smart electricity meters are attached via a third communication network of LPWAN type (103), and a server (140) connected to each collection gateway by a fourth communication network (104) and to the management entity by a fifth communication network (105), each collection gateway serving as a relay, without decrypting a useful frame part, between said smart electricity meters and the server, the server serving as a relay, without decrypting a useful frame part, between each collection gateway and the management entity, and **in that** each smart electricity meter wishing to transmit said information to the management entity implements:
- means for encrypting (302) said information using keys that are shared with the management entity in the framework of an encryption application context established via the first communication network and that are intended for data security operations on the first communication network;
- means for selecting (303) by default the first communication network and switching (303) to the third communication network following malfunctions of the first communication network; and
- means for transmitting (304, 305) a frame to the management entity via the selected communication network, the frame being such that its useful part is formed of said encrypted information, such that said information is encrypted independently of the communication network that is effectively selected.

15. Method implemented by a smart electricity meter (120) for transmitting encrypted information to a management entity (130) in a communication system furthermore including at least one data concentrator device (110) to which the smart electricity meter (120) is attached via a first powerline communication network (101), each data concentrator device being connected to the management entity via a second communication network (102) and serving as a relay, without decrypting a useful frame part, between said smart electricity meter and the management entity,
**characterized in that**, the communication system furthermore including at least one collection gateway (150) to which said smart electricity meter is attached via a third communication network of LPWAN type (103), and a server (140) connected to each collection gateway by a fourth communication network (104) and to the management entity by a fifth communication network (105), each collection gateway serving as a relay, without decrypting a useful frame part, between said smart electricity meters and the server, the server serving as a relay, without decrypting a useful frame part, between each collection gateway and the management entity, said smart electricity meter wishing to transmit said information to the management entity performs the following steps:
- encrypting (302) said information using keys that are shared with the management entity in the framework of an encryption application context established via the first communication network and that are intended for data security operations on the first communication network;
- selecting (303) by default the first communication network and switching (303) to the third communication network following malfunctions of the first communication network; and
- transmitting (304, 305) a frame to the management entity via the selected communication network, the frame being such that its useful part is formed of said encrypted information, such that said information is encrypted independently of the communication network that is effectively selected.

16. Computer program product, **characterized in that** it includes instructions that bring about the execution of the method according to Claim 15 when said instructions are executed by a processor.

17. Information storage medium, **characterized in that** it stores a computer program including instructions that bring about the execution of the method according to Claim 15 when said instructions are executed by a processor.

18. Smart electricity meter (120) configured to transmit encrypted information to a management entity (130) in a communication system furthermore including at least one data concentrator device (110) to which the smart electricity meter (120) is attached via a first powerline communication network (101), each data concentrator device being connected to the management entity via a second communication network (102) and serving as a relay, without decrypting a useful frame part, between said smart electricity meter and the management entity,
**characterized in that**, the communication system furthermore including at least one collection gateway (150) to which said smart electricity meter is attached via a third communication network of LPWAN type (103), and a server (140) connected to each collection gateway by a fourth communication network (104) and to the management entity by a fifth communication network (105), each collection gateway serving as a relay, without decrypting a useful frame part, between said smart electricity meters and the server, the server serving as a relay, without decrypting a useful frame part, between each collection gateway and the management entity, said smart electricity meter wishing to transmit said information to the management entity includes:
- means for encrypting (302) said information using keys that are shared with the management entity in the framework of an encryption application context established via the first communication network and that are intended for data security operations on the first communication network;
- means for selecting (303) by default the first communication network and switching (303) to the third communication network following malfunctions of the first communication network; and
- means for transmitting (304, 305) a frame to the management entity via the selected communication network, the frame being such that its useful part is formed of said encrypted information, such that said information is encrypted independently of the communication network that is effectively selected.
